# EUROPÄISCHE PATENTSCHRIFT

(11) **EP 2 922 727 B1**
(45) Veröffentlichungstag und Bekanntmachung des Hinweises auf die Patenterteilung: **12.10.2016**
(21) Anmeldenummer: 13789484.6
(22) Anmeldetag: 28.10.2013
(51) Int. Cl.: B60M 1/28

(54) **MASCHINE ZUM VERLEGEN VON FAHRLEITUNGSSEILEN**
MACHINE FOR LAYING OVERHEAD LINES
MACHINE D'INSTALLATION DE LIGNES CATÉNAIRES

(30) Priorität: 21.11.2012 AT 12312012
(43) Veröffentlichungstag der Anmeldung: 30.09.2015
(73) Patentinhaber: Plasser & Theurer Export von Bahnbaumaschinen Gesellschaft m.b.H., 1010 Wien (AT)
(72) Erfinder: FLETZER, Robert, A-2331 Vösendorf (AT)
(86) Internationale Anmeldenummer: PCT/EP2013/003237
(87) Internationale Veröffentlichungsnummer: WO 2014/079530

(56) Entgegenhaltungen:
- EP-A1- 0 416 136
- EP-A2- 1 211 122
- WO-A1-2005/115793
- WO-A2-2011/141089

## Beschreibung

Die Erfindung betrifft eine Maschine zum Verlegen von Fahrleitungsseilen gemäß dem Oberbegriff von Anspruch 1.

Eine derartige Maschine ist bereits aus WO 2005/115793 A1 benannt. Die Maschine ist zum gleichzeitigen Verlegen von zwei Fahrleitungsseilen ausgebildet und kann in beide Arbeitsrichtungen eingesetzt werden. Für jedes zu verlegende Seil sind auf einem Trägerrahmen zwischen zwei höhenverstellbaren Führungsrollen eine Speichertrommel und eine Zugspannungsvorrrichtung vorgesehen. Die Trägerrahmen sind betreffend der Maschinenlängsrichtung hintereinander und unabhängig voneinander um eine horizontale, in Maschinenlängsrichtung verlaufende Achse verschwenkbar angeordnet.

Aus DE 100 07 093 C2 und DE 100 39 064 A1 sind weitere Maschinen zur Verlegung von Fahrleitungsseilen in beiden Arbeitsrichtungen ersichtlich.

Die Aufgabe der vorliegenden Erfindung liegt nun in der Schaffung einer Maschine der eingangs angeführten Art, mit der mehrere Fahrleitungsseile in beliebiger Arbeitsrichtung bei unkomplizierter Seilführung und auf Material schonende Art und Weise verlegt werden können.

Diese Aufgabe wird erfindungsgemäß mit einer Maschine der gattungsgemäßen Art durch die im Kennzeichen des Hauptanspruches angeführten Merkmale gelöst.

Mit einer derartig aufgebauten Maschine wird - unabhängig von der Arbeitsrichtung - eine sanfte Biegelinie jedes Fahrleitungsseiles während des gesamten Verlegevorganges gewährleistet. Die Verwendung der Umlenkeinrichtungen stellt sicher, dass die einzelnen Fahrleitungsseile ohne einander zu beeinträchtigen, bei übersichtlicher Seilführung verlegt werden können. Durch die platzsparende Anordnung von Speichertrommeln und Zugspannungsvorrichtungen ist die gleichzeitige Verlegung von verschiedenen Arten von Fahrleitungsseilen mit der jeweils erforderlichen Zugspannung problemlos möglich.

Weitere Vorteile der Erfindung ergeben sich aus den Unteransprüchen und der Zeichnungsbeschreibung.

Im Folgenden wird die Erfindung anhand eines in der Zeichnung dargestellten Ausführungsbeispieles näher beschrieben. Es zeigen: Fig. 1 und 2 jeweils eine Seitenansicht einer erfindungsgemäßen Maschine zum Verlegen von Fahrleitungsseilen, Fig. 3 eine schematische Draufsicht auf die Maschine und Fig. 4 eine Drahtführungseinheit.

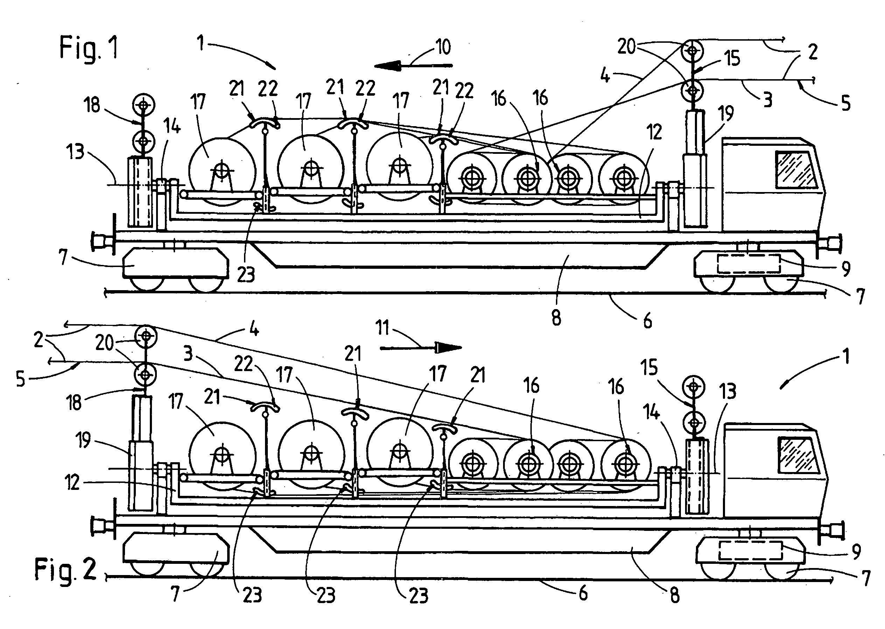

Eine in den Fig. 1 und 2 ersichtliche Maschine 1 zum Verlegen von Fahrleitungsseilen 2 wie Fahrdraht 3 und/oder Tragseil 4 einer Oberleitung 5 eines Gleises 6 besteht im wesentlichen aus einem auf Schienenfahrwerken 7 abgestützten Maschinenrahmen 8. Ein Fahrantrieb 9 ermöglicht ein Verfahren der Maschine 1 in eine erste oder in eine zweite Arbeitsrichtung 10, 11. Am Maschinenrahmen 8 ist ein Trägerrahmen 12 angeordnet, der um eine in Maschinenlängsrichtung verlaufende Achse 13 verschwenkbar gelagert und mit einem Verschwenkantrieb 14 verbunden ist.

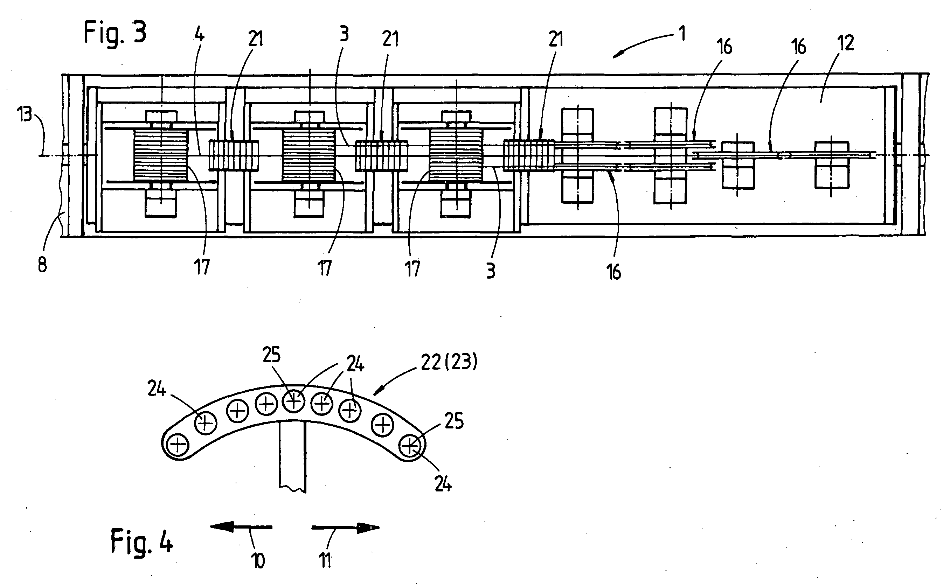

Am Trägerrahmen 12 sind - bezüglich der Maschinenlängsrichtung hintereinander - eine erste Führungseinrichtung 15, Zugspannungsvorrichtungen 16 sowie Speichertrommeln 17 für die Fahrleitungsseile 2 und eine zweite Führungseinrichtung 18 angeordnet. Jede Führungseinrichtung 15, 18 weist jeweils durch einen Höhenverstellantrieb 19 verstellbare Seilrollen 20 zur Führung der von den Speichertrommeln 17 abgewickelten Fahrleitungsseile 2 auf. Die erste Führungseinrichtung 15 wird beim Einsatz der Maschine 1 in der ersten Arbeitsrichtung 10 und die zweite Führungseinrichtung 18 beim Einsatz in der zweiten Arbeitsrichtung 11 verwendet. Jeder Speichertrommel 17 ist eine eigene, von dieser in Maschinenlängsrichtung distanzierte,Zugspannungsvorrichtung 16 zugeordnet (s. Fig. 3). Bezüglich der Maschinenlängsrichtung sind die Speichertrommeln 17 unmittelbar hintereinander angeordnet. Zwischen jeder Speichertrommel 17 und der dieser zugeordneten Zugspannungsvorrichtung 16 ist eine Umlenkeinrichtung 21 angeordnet. Diese weist eine, bezüglich einer Vertikalen oberhalb der Speichertrommel 17 angeordnete, erste Drahtführungseinheit 22 für die erste Arbeitsrichtung 10 und eine, bezüglich der Vertikalen unterhalb der Speichertrommel 17 angeordnete, zweite Drahtführungseinheit 23 für die zweite Arbeitsrichtung 11 auf.

In Fig. 3 ist die Anordnung der Zugspannungsvorrichtungen 16 dargestellt. Diese können in Maschinenlängsrichtung hintereinander und/oder in Maschinenquerrichtung nebeneinander angeordnet sein. Im dargestellten Ausführungsbeispiel sind insgesamt drei Zugspannungsvorrichtungen 16 für die Verlegung von z. B. zwei Fahrdrähten 3 und einem Tragseil 4 vorhanden. Dabei sind die beiden Zugspannungsvorrichtungen 16 für die Fahrdrähte 3 nebeneinander angeordnet, daran anschließend - betreffend die Maschinenlängsrichtung - befindet sich die Zugspannungsvorrichtung 16 für das Tragseil 4.

Wie in Fig. 4 zu sehen ist, weist jede Drahtführungseinheit 22, 23 mindestens eine, aber vorteilhafter mehrere Führungsrollen 24 auf, welche um horizontal und senkrecht zu den Arbeitsrichtungen 10, 11 verlaufende Drehachsen 25 drehbar ausgebildet sind. Die Drehachsen 25 sind bezüglich der Vertikalen unterschiedlich hoch angeordnet.

Wie bereits erwähnt, wird in Fig. 1 und 2 die gleichzeitige Verlegung von zwei Fahrdrähten 3 und eines Tragseiles 4 der Oberleitung 5 dargestellt. Bei der Verlegung der Fahrleitungsseile 2 durch Verfahren der Maschine 1 in der ersten Arbeitsrichtung 10 (Fig. 1) werden die Fahrdrähte 3 und das Tragseil 4 von der Speichertrommel 17 über die erste Drahtführungseinheit 22 der Umlenkeinrichtung 21 zur jeweiligen Zugspannungsvorrichtung 16 geführt. Von dort verlaufen die Fahrleitungsseile 2 zu den jeweiligen Seilrollen 20 der ersten Führungseinrichtung 15. Bei der Verlegung in der zweiten Arbeitsrichtung 11 (Fig. 2) werden die Fahrleitungsseile 2 über die zweite Drahtführungseinheit 23 der zweiten Führungseinrichtung 18 zugeführt. Die Maschine 1 eignet sich natürlich auch zur Demontage bzw. dem Aufwickeln von mehreren Fahrleitungsseilen 2.

## Patentansprüche

1. Maschine (1) zum Verlegen von mindestens zwei Fahrleitungsseilen (2) wie eines Fahrdrahtes (3) und/oder eines Tragseiles (4) einer Oberleitung (5) eines Gleises (6), mit einer - für den Einsatz in einer ersten Arbeitsrichtung (10) der Maschine (1) vorgesehenen - ersten Führungseinrichtung (15) sowie einer - für den Einsatz in einer zweiten Arbeitsrichtung (11) der Maschine (1) vorgesehenen - von der ersten Führungseinrichtung (15) in Maschinenlängsrichtung distanzierten, zweiten Führungseinrichtung (18), wobei jede Führungseinrichtung (15, 18) jeweils durch einen Höhenverstellantrieb (19) verstellbare Seilrollen (20) zur Führung der von Speichertrommeln (17) abgewickelten Fahrleitungsseile (2) aufweisen, sowie den Speichertrommeln (17) zugeordnete, von diesen in Maschinenlängsrichtung distanzierte Zugspannungsvorrichtungen (16), **dadurch gekennzeichnet, dass** die Speichertrommeln (17) bezüglich der Maschinenlängsrichtung unmittelbar hintereinander angeordnet sind und, dass an diese anschließend die Zugspannungsvorrichtungen (16) angeordnet sind und zwischen jeder Speichertrommel (17) und der dieser zugeordneten Zugspannungsvorrichtung (16) eine Umlenkeinrichtung (21) angeordnet ist, welche eine, bezüglich einer Vertikalen oberhalb der Speichertrommel (17) angeordnete, erste Drahtführungseinheit (22) für die erste Arbeitsrichtung (10) und eine, bezüglich der Vertikalen unterhalb der Speichertrommel (17) angeordnete, zweite Drahtführungseinheit (23) für die zweite Arbeitsrichtung (11) aufweist.

2. Maschine nach Anspruch 1, **dadurch gekennzeichnet, dass** jede Drahtführungseinheit (22, 23) mindestens eine Führungsrolle (24) aufweist, welche um eine horizontale und senkecht zu den Arbeitsrichtungen (10, 11) verlaufende Drehachse (25) drehbar ausgebildet ist.

3. Maschine nach Anspruch 2, **dadurch gekennzeichnet, dass** mehrere Führungsrollen (24) vorgesehen sind, deren Drehachsen (25) bezüglich der Vertikalen unterschiedlich hoch angeordnet sind.

4. Maschine nach einem der Ansprüche 1 bis 3, **dadurch gekennzeichnet, dass** die Führungseinrichtungen (15, 18), die Speichertrommeln (17), die Zugspannungsvorrichtungen (16) und die Umlenkeinrichtungen (21) auf einem Trägerrahmen (12) angeordnet sind, der um eine in Maschinenlängsrichtung verlaufende Achse (13) verschwenkbar auf einem Maschinenrahmen (8) gelagert und mit einem Verschwenkantrieb (14) verbunden ist.

5. Maschine nach einem der Ansprüche 1 bis 4, **dadurch gekennzeichnet, dass** die Zugspannungsvorrichtungen (16) in Maschinenlängsrichtung hintereinander angeordnet sind.

6. Maschine nach einem der Ansprüche 1 bis 4, **dadurch gekennzeichnet, dass** die Zugspannungsvorrichtungen (16) in Maschinenquerrichtung nebeneinander angeordnet sind.

## Claims

1. A machine (1) for installing at least two catenary cables (2), such as a contact wire (3) and/or a carrying cable (4) of an overhead line (5) of a track (6), with a first guiding device (15) provided for operation in a first working direction (10) of the machine (1), and a second guiding device (18) - provided for operation in a second working direction (11) of the machine (1) - which is spaced from the first guiding device (15) in the longitudinal direction of the machine, wherein each guiding device (15, 18) has cable rollers (20), adjustable in each case by means of a vertical adjustment drive (19), for guiding the catenary cables (2) reeled off from storage drums (17), as well as tensile stress devices (16) associated with the storage drums (17) and spaced from these in the longitudinal direction of the machine, **characterized in that** the storage drums (17) are arranged one immediately following the other with regard to the longitudinal direction of the machine, and that the tensile stress devices (16) are arranged adjoining the storage drums (17), and that, between each storage drum (17) and the associated tensile stress device (16), a deflection device (21) is arranged which has a first cable guiding unit (22), arranged above the storage drum (17) with regard to a vertical, for the first working direction (10) and a second cable guiding unit (23), arranged below the storage drum (17) with regard to the vertical, for the second working direction (11).

2. A machine according to claim 1, **characterized in that** each cable guiding unit (22, 23) has at least one guide roller (24) which is designed to be rotatable about an axis of rotation (25) extending horizontally and perpendicularly to the working directions (10, 11).

3. A machine according to claim 2, **characterized in that** several guide rollers (24) are provided, the axes of rotation (24) of which are arranged at different height with respect to the vertical.

4. A machine according to one of claims 1 to 3, **characterized in that** the guiding devices (15, 18), the storage drums (17), the tensile stress devices (16) and the deflection devices (21) are arranged on a support frame (12) which is mounted on a machine frame (8) for pivoting about an axis (13), extending the longitudinal direction of the machine, and connected to a pivot drive (14).

5. A machine according to one of claims 1 to 4, **characterized in that** the tensile stress devices (16) are arranged one following the other in the longitudinal direction of the machine.

6. A machine according to one of claims 1 to 4, **characterized in that** the tensile stress devices (16) are arranged adjacent to one another in the transverse direction of the machine.

## Revendications

1. Machine (1) pour la pose d'au moins deux câbles de ligne de contact (2) tels qu'un fil de contact (3) et/ou un câble porteur (4) d'un fil aérien (5) d'une voie ferrée (6), avec un premier dispositif de guidage (15) prévu pour l'utilisation dans un premier sens de travail (10) de la machine (1) ainsi qu'un second dispositif de guidage (18) prévu pour l'utilisation dans un second sens de travail (11) de la machine (1), écarté du premier dispositif de guidage (15) dans le sens longitudinal de machine, dans laquelle chaque dispositif de guidage (15, 18) présente à chaque fois des poulies (20) pouvant être réglées par un entraînement de réglage en hauteur (19) pour le guidage des câbles de ligne de contact (2) déroulés par des tambours d'enroulement (17), ainsi que des dispositifs d'effort de traction (16) associés aux tambours d'enroulement (17), écartés de ceux-ci dans le sens longitudinal de machine, **caractérisée en ce que** les tambours d'enroulement (17) sont disposés directement l'un derrière l'autre par rapport au sens longitudinal de machine, et que les dispositifs d'effort de traction (16) sont disposés de manière adjacente à ceux-ci et un dispositif de déviation (21) est disposé entre chaque tambour d'enroulement (17) et le dispositif d'effort de traction (16) associé à celui-ci, lequel présente un premier module de guidage filaire (22) disposé au-dessus du tambour d'enroulement (17) par rapport à une verticale pour le premier sens de travail (10) et un second module de guidage filaire (23) disposé en dessous du tambour d'enroulement (17) par rapport à la verticale pour le second sens de travail (11).

2. Machine selon la revendication 1, **caractérisée en ce que** chaque module de guidage filaire (22, 23) présente au moins un rouleau de guidage (24) qui est réalisé de manière à pouvoir tourner autour d'un axe de rotation horizontal (25) et s'étendant perpendiculairement aux sens de travail (10, 11).

3. Machine selon la revendication 2, **caractérisée en ce que** plusieurs rouleaux de guidage (24) sont prévus dont les axes de rotation (25) sont disposés à une hauteur différente par rapport à la verticale.

4. Machine selon une des revendications 1 à 3, **caractérisée en ce que** les dispositifs de guidage (15, 18), les tambours d'enroulement (17), les dispositifs d'effort de traction (16) et les dispositifs de déviation (21) sont disposés sur un cadre porteur (12) qui est logé sur un châssis de machine (8) de manière à pouvoir pivoter autour d'un axe (13) s'étendant dans le sens longitudinal de machine et relié à un entraînement pivotant (14).

5. Machine selon une des revendications 1 à 4, **caractérisée en ce que** les dispositifs d'effort de traction (16) sont disposés l'un derrière l'autre dans le sens longitudinal de machine.

6. Machine selon une des revendications 1 à 4, **caractérisée en ce que** les dispositifs d'effort de traction (16) sont disposés l'un à côté de l'autre dans le sens transversal de machine.
